# EUROPÄISCHE PATENTSCHRIFT

(11) **EP 1 935 552 B1**
(45) Veröffentlichungstag und Bekanntmachung des Hinweises auf die Patenterteilung: **31.10.2012**
(21) Anmeldenummer: 07023923.1
(22) Anmeldetag: 11.12.2007
(51) Int. Cl.: B23K 26/067, B23K 26/20, B23K 26/04, B23K 1/005

(54) **Mehrstrahllaserbearbeitungskopf**
Multi-beam laser processing head
Tête de traitement à plusieurs faisceaux laser

(30) Priorität: 20.12.2006 DE 102006060116
(43) Veröffentlichungstag der Anmeldung: 25.06.2008
(73) Patentinhaber: Erlas Erlanger Lasertechnik GmbH, 91056 Erlangen (DE); Bayerische Motoren Werke AG, 80809 München (DE)
(72) Erfinder: Hoffmann, Peter, Prof., 90425 Nürnberg (DE); Hornig, Hans, 83536 Gars (DE); Berndl, Jürgen, 85405 Nandlstadt (DE)
(74) Vertreter: Negendanck, Matthias

(56) Entgegenhaltungen:
- EP-A1- 0 281 686
- JP-A- 2000 244 095
- JP-A- 2003 025 084
- JP-A- 2003 080 388

## Beschreibung

Die Erfindung betrifft einen Mehrstrahllaserbearbeitungskopf gemäß dem Oberbegriff des Anspruchs 1, wobei der Mehrstrahllaserbearbeitungskopf ausgebildet ist, einen Eingangslaserstrahl in mindestens zwei Ausgangslaserstrahlen aufzuteilen und diese in einen gemeinsamen Bearbeitungsbereich zusammenzuführen.

Die Lasermaterialbearbeitung wird mittlerweile bei einer Vielzahl von Fertigungstechniken, wie zum Beispiel Schneiden, Schweißen, Löten, Härten oder auch Beschichten, eingesetzt. Während sich manche Fertigungsprozesse im Labormaßstab in einfacher Weise und reproduzierbar realisieren lassen, kommt es bei der Umsetzung auf einen industriellen Stand oftmals zu so schwerwiegenden Problemen, dass das entsprechende Fertigungsverfahren scheitert. Dabei kommt der Strahlführung und der Strahlformung des Laserstrahls bei der Realisierung und Umsetzung der Fertigungsverfahren oftmals eine Schlüsselrolle zu.

Eine mittlerweile übliche Technik der Strahlführung ist die sogenannte Zweistrahl- oder Mehrstrahltechnik, wobei dem Bearbeitungsbereich zwei oder mehr Laserstrahlen zeitgleich zur Bearbeitung zugeführt werden. Durch diese Art der Strahlführung bzw. -formung ist es möglich, in dem Bearbeitungsbereich spezifische Voraussetzungen beispielsweise hinsichtlich der Energieeinbringung zu erreichen.

Die industrienahe oder -taugliche Umsetzung der Zwei- bzw. Mehrstrahltechnik erfordert eine Systemtechnik, die dem Spannungsfeld der Alltagstauglichkeit, Robustheit, Kompaktheit und Standfestigkeit eines industriellen Standards genügen muss.

Die Druckschrift FR 2 823 688 betrifft eine Anordnung zur Lasermaterialbearbeitung mit einem Zusatzwerkstoff, wobei ein einfallender Laserstrahl in einen Ringstrahl geformt wird, sodass ein Zusatzwerkstoff koaxial zugeführt werden kann.

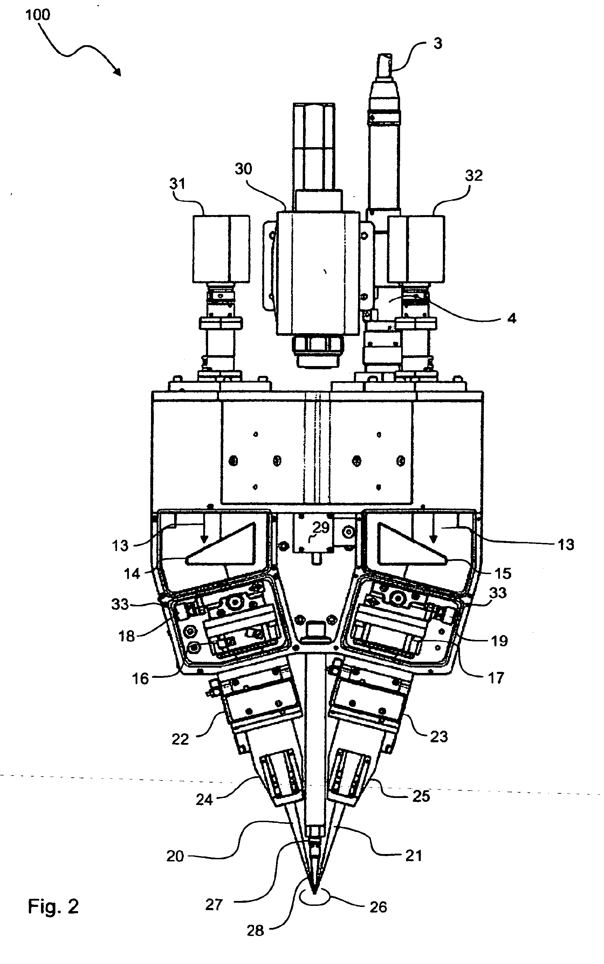

Die Druckschrift US 4 250 372 betrifft eine Bearbeitungsvorrichtung zum Laserstrahlhärten, welche jedoch keine Zuführungseinrichtung zur Zuführung eines Mittels in den Bearbeitungsbereich aufweist. Wie sich insbesondere aus der Figur 2 durch die Anordnung der Fokussierlinsen 241 und 242 ergibt ist hier auch kein Platz für derartige Zuführungseinrichtungen vorgesehen.

Die Druckschrift EP1 568 435 A1 betrifft eine Laserbearbeitungsmaschine, insbesondere einen Bearbeitungskopf, welcher einen Strahlteiler zur Aufteilung des Laserstrahls in zwei auf das Werkstück fokussierte Strahlteile aufweist. Ein einfallender Laserstrahl wird dabei in zwei rechtwinklig zu dem einfallenden Laserstrahl verlaufende Teilstrahlen aufgeteilt, welche dann über Fokussierspiegel auf einen gemeinsamen Bearbeitungsort gerichtet werden.

Die Druckschriften JP2003080388 und JP2000244095 beschreiben jeweils Vorrichtungen bei denen ein Eingangslaserstrahl in mehrere Einzellaserstrahlen unterteilt wird, die auf ein Werkstück projiziert werden. Ein Zusatzwerkstoff oder dergleichen wird bei der Bearbeitung nicht zugeführt.

Beispielsweise wird in der europäischen Patentanmeldung EP 1179382A1, ein Laserstrahlbearbeitungskopf und ein Laserstrahlbearbeitungsmaschine vorgeschlagen, wobei in dem Laserstrahlbearbeitungskopf der Laserstrahl in zwei Teilstrahlen aufgeteilt und diese zwei Teilstrahlen auf getrennten Strahlwegen, jedoch durch eine gemeinsame Optik, in einen gemeinsamen Bearbeitungsbereich zusammenführt werden. Koaxial zu den zwei Teilstrahlen ist eine Werkzeugspitze angeordnet, die zur Zuführung von beispielsweise Gas, Draht, Pulver oder dergleichen dient.

Die Strahlführung innerhalb des Bearbeitungskopfes ist dabei so ausgebildet, dass ein kollimierter Ausgangslaserstrahl in zwei Teilstrahlen aufgeteilt wird, wobei die zwei Teilstrahlen jeweils - je nach Ausbildungsform - parallel bzw. senkrecht stehend zueinander verlaufen und schließlich über eine gemeinsame Fokussierlinse in einen gemeinsamen Bearbeitungsbereich fokussiert werden. Der Vorteil der in der EP-Anmeldung dargestellten Vorrichtung soll insbesondere darin liegen, einen platzsparenden, kompakten Bearbeitungskopf vorzusehen.

Es ist Aufgabe der vorliegenden Erfindung, einen Mehrstrahllaserbearbeitungskopf vorzuschlagen, welcher einen Eingangslaserstrahl in mindestens zwei Ausgangslaserstrahlen aufteilt und robust und zugleich kompakt aufgebaut ist.

Diese Aufgabe wird mit einem Mehrstrahllaserbearbeitungskopf mit den Merkmalen des Anspruchs 1 gelöst. Bevorzugte oder vorteilhafte Ausführungsformen der Erfindung ergeben sich aus den Unteransprüchen, der nachfolgenden Beschreibung und/oder der beigefügten Figuren.

Erfindungsgemäß wird ein Mehrstrahllaserbearbeitungskopf vorgeschlagen, der ausgebildet ist, einen Eingangslaserstrahl in mindestens zwei Ausgangslaserstrahlen aufzuteilen und diese in einen gemeinsamen Bearbeitungsbereich zusammenzuführen.

Der Mehrstrahllaserbearbeitungskopf ist insbesondere ausgebildet, um an eine Laseranlage - zum Beispiel über eine offene Strahlführung oder über eine Lichtleiterstrahlführung - gekoppelt zu werden. Die Laseranlage ist insbesondere als CO₂-, Nd:YAG-, Festkörper-, Gas- oder Diodenlaseranlage ausgebildet.

Der gemeinsame Bearbeitungsbereich bezeichnet vorzugsweise einen Bereich auf einer Werkstückoberfläche, welche zeitgleich durch die mindestens zwei Ausgangslaserstrahlen bearbeitet wird, wobei die zwei Ausgangslaserstrahlen bei der Bearbeitung einen synergetischen Effekt erreichen und/oder einen zusammenhängenden Bearbeitungsbereich bearbeiten.

Der Mehrstrahllaserbearbeitungskopf weist ein Strahlteilermodul auf, welches ausgebildet und/oder angeordnet ist, den Eingangslaserstrahl auf einen ersten und einen zweiten Strahlweg in zwei Teilstrahlen aufzuteilen, wobei der Ausgangslaserstrahl insbesondere kollimiert und/oder als Parallellaserstrahl vorliegt. Bei alternativen Ausführungsformen kann auch eine weitere Aufteilung in einen zusätzlichen dritten, vierten, etc. Strahlweg vorgesehen sein. Die Aufteilung des Eingangslaserstrahls kann beliebig umgesetzt sein, bevorzugt werden teildurchlässige Spiegel, Scraperspiegel, Blendenspiegel oder ähnliches eingesetzt. Das Strahlteilermodul kann optional auch mehrere optische Elemente umfassen.

Ein Fokussiermittel ist ausgebildet, die zwei bzw. die mindestens zwei Teilstrahlen zu fokussieren, wobei die Ausgangslaserstrahlen erzeugt werden. Hierzu kann das Fokussiermittel als transmissive, diffraktive oder auch reflektive Optik ausgebildet sein.

Es liegt dabei im Bereich der Erfindung, dass die zwei oder alle Teilstrahlen durch eine gemeinsame Optik fokussiert werden. Bevorzugt ist jedoch, dass jeder Teilstrahl und/oder jeder Ausgangslaserstrahl durch eine dem Teilstrahl bzw. dem Ausgangslaserstrahl zugeordnete, eigene Fokussieroptik fokussiert wird bzw. ist. Diese bevorzugte Ausführungsform hat den Vorteil, dass auf im Durchmesser sehr große und damit teure Fokussieroptiken verzichtet werden kann.

Der Mehrstrahllaserbearbeitungskopf weist eine Zuführungseinrichtung auf, welche dem Bearbeitungsbereich über einen Endabschnitt ein Mittel zuführt, wobei das Mittel gasförmig, flüssig oder fest und/oder als zusätzlicher Energiestrom ausgebildet sein kann. Der Endabschnitt ist von den mindestens zwei Ausgangslaserstrahlen umgeben und/oder koaxial zu diesen angeordnet.

Der Endabschnitt definiert in seiner Mittelführungsrichtung eine Mittenachse für den Mehrstrahllaserbearbeitungskopf. Vorzugsweise ist die Mittenachse als eine zwischen den Strahlachsen der einfallenden Ausgangslaserstrahlen mittig angeordnete Achse ausgebildet.

Der Erfindung folgend ist vorgeschlagen, dass der erste und der zweite Strahlweg in einer Projektion auf eine Verteilungsebene, die senkrecht oder im wesentlichen senkrecht zu der Mittenachse angeordnet ist, und/oder in der Verteilungsebene, zumindest abschnittsweise zueinander winklig verlaufend ausgebildet sind.

Bei einer möglichen Ausführungsalternative sind der erste und der zweite Strahlweg zueinander in Richtung der Mittenachse höhenversetzt angeordnet, bei einer weiteren und besonders bevorzugten Ausführungsalternative bilden erster und zweiter Strahlweg die Verteilungsebene, die senkrecht oder im Wesentlichen senkrecht zu der Mittenachse angeordnet ist. Bei einer weiteren möglichen Ausführungsalternative bilden winklig zueinander angeordneten Abschnitte des ersten und zweiten Strahlwegs eine gemeinsame Ebene, die gegenüber der Verteilungsebene um weniger als 45°, vorzugsweise weniger als 30°, insbesondere weniger als 15° geneigt ist.

Die Erfindung geht bei dieser Ausbildung von der Überlegung aus, dass der im Stand der Technik gezeigte Strahlverlauf, welcher in der Verteilungsebene bezüglich des ersten und des zweiten Strahlwegs stets geradlinig ist, zwar eine kompakte Lösung darzustellen scheint, jedoch wenig Bauraum für die Integration der Zuführungseinrichtung verbleibt. Die Zuführungseinrichtung muss dann in aufwendiger Weise bogenförmig zu den Strahlwegen angeordnet werden. Dem gegenüber sieht die erfindungsgemäße Lösung vor, dass die Zuführungseinrichtung in einem durch die winklig angeordneten Strahlwege erzeugten Zwischenraum platzsparend, zumindest abschnittsweise untergebracht werden kann.

Eine ergänzende oder alternative erfindungsgemäße Lösung sieht vor, dass der erste und/oder der zweite Strahlweg in einer Projektion auf eine Einstrahlebene, die parallel oder im wesentlichen parallel zu der Mittenachse angeordnet ist, einen stumpfwinkligen Knick aufweist bzw. aufweisen, welcher betragsmäßig größer als 120°, vorzugsweise größer als 150°, insbesondere größer als 160° ausgebildet ist. Hierbei wird von einem Maximalwinkel von 180° bei einem ungeknickten Verlauf des Strahlwegs ausgegangen.

Auch dieser Erfindungsausführung liegt die gemeinsame erfinderische Idee zu Grunde, den Bauraum des Mehrstrahllaserbearbeitungskopfes zu verkleinern, und zwar indem die Strahlwege in der Einstrahlebene nochmals leicht abgeknickt werden, insbesondere um zunächst zwischen den zwei Strahlwegen Raum für die Integration der Zuführungseinrichtung oder Abschnitten davon zu schaffen und dann im bearbeitungsnahen Bereich die Ausgangslaserstrahlen zueinander zusammen zu führen.

Bei einer bevorzugten Umsetzung sind der erste und der zweite Strahlweg in der Projektion auf bzw. in der Verteilungsebene selbst zueinander y-förmig und/oder dreieckig angeordnet, wobei der Verzweigungspunkt bzw. der dritte Eckpunkt des Dreiecks vorzugsweise ein Strahlteilerelement umfasst und/oder durch dieses gebildet wird. Besonders bevorzugt nehmen der erste und der zweite Strahlweg zusammen einen Winkel von 90° ein.

In dem durch die y-förmige oder dreieckige Anordnung gebildeten Zwischenbereich sind bevorzugt zumindest Abschnitte der Zuführungseinrichtung integriert oder angeordnet. Bei diesen Abschnitten kann es sich zum Beispiel um Zuleitungen, Motoren, Vorratsvorrichtungen, wie z. B. Drahtspulen, etc. handeln.

Bei einer bevorzugten Weiterbildung der Erfindung weisen der erste und der zweite Strahlweg jeweils eine Umlenkeinheit auf, die eine rechtwinklige oder im wesentlichen rechtwinklige Umlenkung des jeweiligen Strahlwegs bewirken. Insbesondere werden die Strahlwege aus der Verteilungsebene heraus rechtwinklig - insbesondere in Grobrichtung des Bearbeitungsbereiches und/oder parallel zur Mittenachse umgelenkt.

Bei einer vorteilhaften Realisierung weist der Mehrstrahllaserbearbeitungskopf Beobachtungssensoren und/oder Kameras auf, welche koaxial zu dem ersten bzw. zweiten Strahlweg nach der ersten Umlenkeinheit angeordnet sind und die vorzugsweise zur Prozessbeobachtung oder zur Prozesseinrichtung ausgebildet sind. Bei dieser Realisierung wird ein weiterer Vorteil der Erfindung genutzt, und zwar, dass die ersten Umlenkeinheiten der Strahlwege so angeordnet werden können, dass eine zu den Strahlwegen koaxiale Prozess-und/oder Bearbeitungsbereichsbeobachtung ohne deutliche Vergrößerung des Mehrstrahllaserbearbeitungskopfes ermöglicht wird.

Bei einer bevorzugten konstruktiven Umsetzung ist das Strahlteilermodul als ein teilreflektierender Spiegel oder als eine Kombination aus einem Umlenkspiegel und einem oder dem teilreflektierenden Spiegel aufgebaut. Besonders bevorzugt ist es dabei, wenn der Ausgangsstrahl zunächst parallel zu der Mittenachse angeordnet ist, durch den Umlenkspiegel um 90° in die Verteilungsebene umgelenkt wird und dort mit dem teildurchlässigen Spiegel auf die zwei Strahlwege verteilt wird, die einen Zwischenwinkel von 90° einnehmen. Es liegt auch im Rahmen der Erfindung, wenn statt teiltransmissiven Elementen, teilreflektive Elemente oder mechanische Strahlteiler verwendet werden.

Es ist bevorzugt, dass der Mehrstrahllaserbearbeitungskopf so ausgebildet ist, dass die Teilstrahlen über den ersten und/oder zweiten Strahlweg kollimiert oder im wesentlichen kollimiert verlaufen. In einer sehr engen Definition bedeutet ein kollimierter Strahl ein Strahl, dessen Strahlfokus in der Unendlichkeit liegt. Allerdings ist es üblich, die Fokuslage bei der Bearbeitung durch eine leichte Fokussierung des kollimierten Strahles zu erreichen, so dass im Sinne der Erfindung der Begriff kollimierter Strahl auch auf leicht fokussierte bzw. defokussierte Strahlen angewendet wird. Ein leicht fokussierter Strahl liegt beispielsweise vor, wenn der Fokus von der Kollimationslinse mehr als 1 m, insbesondere mehr als 2 m, vorzugsweise mehr als drei Meter entfernt liegt.

Optional weist der Mehrstrahllaserbearbeitungskopf nach der ersten Umlenkeinheit einen bzw. den Knick im weiteren Strahlverlauf auf, der vorzugsweise mittels eines ersten oder eines zweiten Prismas erreicht wird, die in dem ersten Strahlweg bzw. in dem zweiten Strahlweg angeordnet sind. Derartige Prismen sind dem Fachmann bekannt und bestehen beispielsweise aus einem Glaskorpus, dessen Eintrittsoberfläche und Austrittsoberfläche zueinander winklig angeordnet sind.

Bevorzugt sind das erste und das zweite Prisma zueinander symmetrisch, insbesondere zu der Mittenachse, angeordnet, so dass insgesamt ein symmetrischer Strahlverlauf zwischen ersten und zweiten Strahlweg erreicht wird. Optional weist das erste und/oder das zweite Prisma jeweils eine justierbare Halterung für Justagezwecke auf.

Obwohl es prinzipiell möglich ist, dass die mindestens zwei Teilstrahlen durch eine gemeinsame Fokussieroptik bzw. -linse geführt werden, ist es bevorzugt, dass das Fokussiermittel als zwei oder mehr getrennte Fokussieroptiken ausgebildet sind, die jeweils einem Teilstrahl individuell zugeordnet sind und insbesondere voneinander beabstandet angeordnet sind.

Insbesondere um die Symmetrie im bearbeitungsnahen Bereich des Mehrstrahllaserbearbeitungskopfes zu erhalten, ist es weiterhin bevorzugt, dass die Fokussieroptiken zueinander symmetrisch, insbesondere bezüglich der Mittenachse, angeordnet sind. Dabei ist es aber besonders bevorzugt, wenn die Fokussieroptiken zueinander um einen Neigungswinkel geneigt positioniert sind, insbesondere derart, dass die Fokussieroptiken in ihrer Flächenerstreckung jeweils senkrecht zu dem Strahlverlauf des zugeordneten Ausgangslaserstrahls angeordnet sind. Dies wird insbesondere dadurch erreicht, dass der Neigungswinkel der Fokussieroptiken jeweils dem Knickwinkel abzüglich 180° entspricht.

Um eine vielfältige Einsetzbarkeit bzw. Parametrierbarkeit des Mehrstrahllaserbearbeitungskopfes zu erreichen, ist vorzugsweise vorgesehen, dass die Fokussieroptiken parallel zu ihrer Flächenerstreckung verschiebbar angeordnet sind. Durch eine Verschiebung der Fokussieroptiken relativ zu den Teilstrahlen werden die zugeordneten Foki der Ausgangslaserstrahlen in annähernd der gleichen Größe wie die Verschiebung der Fokussieroptiken mitbewegt. Somit ist durch die optionale Verschiebung der Fokussieroptiken eine Verschiebung des Fokuspunkts der Ausgangsstrahlen im Bearbeitungsbereich, und zwar insbesondere in einer Ebene, die parallel zur Verteilungsebene ist, gegeben. Auf diese Weise ist es möglich, Bearbeitungsprozesse z.B. durch einen Parameter "Fokusabstand" gezielt zu beeinflussen.

Die Verschiebung der Fokussieroptiken erfolgt vorzugsweise über eine Verschiebemechanik, die beispielsweise als zwei gekreuzt angeordnete Verschiebetische ausgebildet sind. Hierbei ist es möglich, auf Verschiebetische zurückzugreifen, die kostengünstig und mit hoher Präzision erhältlich sind. Die Fokussieroptik wird vorzugsweise so positioniert, dass der Ausgangslaserstrahl bzw. der fokussierte Ausgangslaserstrahl durch eine freie Durchgangsöffnung in der Mitte der Verschiebetische durchgeführt wird. Die Verschiebung ist dabei entweder manuell - beispielsweise als eine mögliche Justage vor der Bearbeitung - oder motorisch - welche auch eine Nachführung während des Bearbeitungsprozesses erlaubt - bedienbar.

Um eine industrienahe Umsetzung des Mehrstrahllaserbearbeitungskopfes zu gewährleisten, weist dieser bevorzugt ein Gehäuse auf, welches einen ersten optischen Raum umfasst, der im Betrieb luftdicht und/oder schmutzdicht gegenüber der Umgebung abgeschlossen ist und welcher das Strahlteilermodul und die Prismen aufnimmt. Die Zuordnung dieser beiden optischen Elemente zu dem ersten optischen Raum ist insbesondere dadurch begründet, dass diese starre oder quasi starre Komponenten darstellen, die im normalen Betrieb des Mehrstrahllaserbearbeitungskopfes nicht mehr verändert werden müssen. Vorzugsweise weist dieser erste optische Raum einen Abschlussdeckel auf, der mit einer Dauerverschraubung befestigt ist. Eine Dauerverschraubung stellt dabei eine Verschraubung dar, die entweder eine Vielzahl von Schrauben aufweist, so dass daraus klar ersichtlich ist, dass dieser Abschlussdeckel nicht bei jeder Bearbeitung geöffnet werden soll, oder Verschlussmittel aufweist, die ein schnelles Öffnen des Abschlussdeckels erst gar nicht ermöglichen.

Bei einer bevorzugten Weiterführung weist das Gehäuse einen zweiten und/oder einen dritten optischen Raum auf, in dem die Verschiebemechaniken zusammen mit den Fokussieroptiken angeordnet sind und der über Wartungsluken erreichbar ist. Dabei ist in vorteilhafter Weise vorgesehen, dass die Wartungsluken über Schnellverschlüsse erreichbar sind, die mit weniger Montageaufwand zu öffnen und zu schließen sind, wie die Dauerverschlüsse des Abschlussdeckels.

Bei einer vorteilhaften Ausbildung ist das Gehäuse als ein einstückiger Korpus ausgebildet, der zugleich als optische Bank für die Komponenten: Strahlteilermodul, gegebenenfalls Lichtleiterbuchse, Umlenkeinheiten, Prismen und Fokussieroptiken dient. Besonders bevorzugt und angepasst für einen Dauerbetrieb in der Fertigung ist das Gehäuse wassergekühlt oder aktiv luftgekühlt ausgebildet.

Der erfindungsgemäße Mehrstrahllaserbearbeitungskopf ist insbesondere dadurch gekennzeichnet, dass er ausgebildet und/oder angepasst für Löt-, Schneid-, Schweiß- und/oder Beschichtungsaufgaben ist. Dementsprechend ist die Zuführungseinrichtung vorzugsweise als Lötdraht-, Schneidgas-, Schweißdraht-, Schweißstrom-, Schweißpulver-, und/oder Pulverbeschichtungs- oder Beschichtungsdrahtzuführeinrichtung realisiert.

Bei einer bevorzugten Integration des Mehrstrahllaserbearbeitungskopfes in eine Lasermaterialbearbeitungsanlage ist die Steuerung vorzugsweise derart programmtechnisch und/oder schaltungstechnisch ausgebildet, dass der sogenannte Tool-Center-Point (TCP) auf der Mittenachse des Mehrstrahllaserbearbeitungskopfes angeordnet ist und die Ausgangslaserstrahlen zu diesem TCP justiert werden. Diese Ausführungsform hat den Vorteil, dass bei der Programmierung der Laseranlage als wesentlicher Bezugspunkt der Auftreffpunkt des Mittels in dem Bearbeitungsbereich bzw. in einer Bearbeitungsebene definiert ist und die Ausgangslaserstrahlen frei zu diesem TCP justierbar sind.

Weitere Merkmale, Vorteile und Wirkung der Erfindung ergeben sich aus der nachfolgenden Beschreibung sowie den beigefügten Figuren von Ausführungsbeispielen der Erfindung. Dabei zeigen:
- Figur: 1 eine Vorderansicht in schematischer Darstellung mit eingezeichnetem Strahlengang eines Zweistrahlkopfes als ein erstes Ausführungsbeispiel der Erfindung;
- Figur 2: in Vorderansicht in schematischer Darstellung ein abgewandelter Zweistrahlkopf als ein zweites Ausführungsbeispiel der Erfindung mit teilweise eingezeichnetem Strahlengang;
- Figur 3: eine Draufsicht von oben bei geöffnetem Deckel in schematischer Darstellung des Zweistrahlkopfes in Figur 2 mit eingezeichnetem Strahlgang;
- Figur 4: in Vorderansicht in schematischer Darstellung der Zweistrahlkopf in Figur 2 mit geschlossenem Deckel;
- Figur 5: in schematischer dreidimensionaler Darstellung schräg von vorne der Zweistrahlkopf in Figur 2;
- Figur 6: in schematischer dreidimensionaler Darstellung schräg von hinten der Zweistrahlkopf in Figur 2;
- Figur 7: in schematischer Seitendarstellung der Zweistrahlkopf in Figur 2.

Einander entsprechende oder gleiche Bezugszeichen bezeichnen jeweils einander entsprechende oder gleiche Teile.

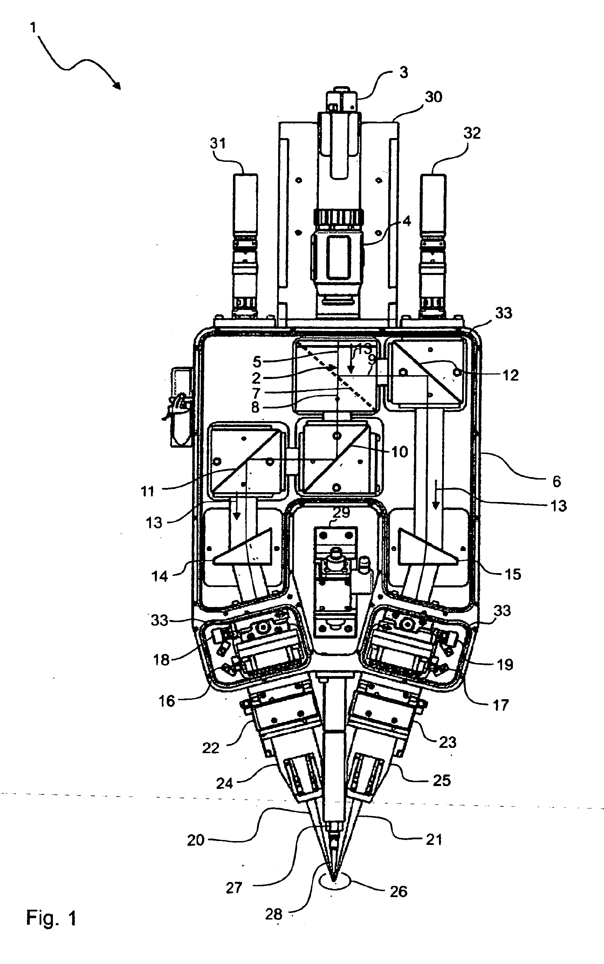

Die Figur 1 zeigt in einer schematischen Draufsicht einen Zweistrahlkopf 1 mit geöffneten bzw. zeichnerisch unterdrückten Deckeln sowie einem schematisch eingezeichnetem Strahlenverlauf 2 als ein erstes Ausführungsbeispiel der Erfindung.

Der Zweistrahlkopf 1 ist Teil einer nicht dargestellten Laserbearbeitungsanlage, welche des Weiteren eine Strahlquelle, eine Führungsmaschine und eine Steuerung umfasst. Die Strahlquelle ist als Nd:YAG-Laser mit einer Leistung von mindestens einem Kilowatt ausgebildet, die Führungsmaschine ist beispielsweise als Roboter, insbesondere 6-Achsen-Roboter realisiert, die Steuerung dient zur Ansteuerung des Zweistrahlkopfes 1, der Strahlquelle sowie der Führungsmaschine.

Ausgehend von der Strahlquelle wird ein Laserstrahl über ein Lichtleitkabel zu einem Faserstecker 3 geführt, der in eine Kollimatoreinheit 4, die dem Zweistrahlkopf 1 zugeordnet ist, einsteckbar bzw. eingesteckt ist. Nach der Kollimatoreinheit 4 tritt der nun in der Figur 1 dargestellte Eingangslaserstrahl 5 in das Gehäuse 6 des Zweistrahlkopfes ein, in dem der Eingangslaserstrahl 5 offen und kollimiert bzw. nahezu kollimiert geführt ist.

Der Eingangslaserstrahl 5 trifft auf ein Strahlteilerelement 7, welches in diesem Beispiel als ein Strahlteilerspiegel mit einer Teilung von 50:50 ausgebildet ist (beispielhafte Spezifikation: BS 1064/45 U50/AR + R50% 655; Rückseite: BBAR) und den Eingangslaserstrahl 5 in einen ersten Teilstrahl 8 und in einen zweiten Teilstrahl 9 aufteilt, die rechtwinklig zueinander angeordnet sind.

Der erste Teilstrahl 8 transmittiert das Strahlteilerelement 7, wird gegenüber dem Eingangslaserstrahl 5 leicht parallel versetzt und nachfolgend in eine erste Umlenkeinheit 10 geführt, die als Umlenkspiegel ausgebildet ist (beispielhafte Spezifikation: HR 1064/45 HR 655 BBAR).

Im weiteren Verlauf wird der erste Teilstrahl 8, welcher durch die erste Umlenkeinheit 10 rechtwinklig umgelenkt ist, in eine zweite Umlenkeinheit 11 geführt, welche ebenfalls als Umlenkspiegel ausgebildet ist. Im Gegensatz zu dem Umlenkspiegel in der ersten Umlenkeinheit 10 ist der Umlenkspiegel in der zweiten Umlenkeinheit 11 zugleich als Auskoppelspiegel für Licht im sichtbaren Bereich, insbesondere im Wellenlängenbereich um 655 nm, ausgebildet, so dass eine Beobachtung des Bearbeitungsbereichs koaxial mit dem ersten Teilstrahl 8 erfolgen kann. Der erste Teilstrahl 8 wird durch die zweite Umlenkeinheit 11 nochmals rechtwinklig umgelenkt, so dass der erste Teilstrahl parallel oder im Wesentlichen parallel zu dem Eingangslaserstrahl 5 ausgerichtet ist.

Im Strahlteilerelement 7 wird der zweite Teilstrahl 9 rechtwinklig abgelenkt und tritt nachfolgend in eine dritte Umlenkeinheit 12 ein, die analog zu der zweiten Umlenkeinheit 11 ausgebildet ist und den zweiten Teilstrahl 9 rechtwinklig ablenkt, so dass dieser parallel zu dem Eingangslaserstrahl 5 und/oder zu dem ersten Teilstrahl 8 nach der zweiten Umlenkeinheit 11 ausgerichtet ist (jeweils Pfeil 13). Im Beginn des unteren Drittels des Gehäuses 6 des Zweistrahlkopfes 1 sind somit erster und zweiter Teilstrahl 8 bzw. 9 parallel zueinander angeordnet und symmetrisch zu dem Eingangslaserstrahl verteilt. Eingangslaserstrahl 5, erster Teilstrahl 8 und zweiter Teilstrahl 9 befinden sich in einer gemeinsamen Ebene, die als Einstrahlebene bezeichnet werden kann.

Nachfolgend treten erster bzw. zweiter Teilstrahl 8 bzw. 9 jeweils in eine Ablenkeinheit 14 bzw. 15 ein, die die jeweiligen Teilstrahlen 8 bzw. 9 um einen Winkel von ca. 15° in der Einstrahlebene zueinander ablenken, so dass die austretenden Teilstrahlen 8 und 9 zueinander konvergierend ausgereichtet sind. Die Ablenkeinheiten 14 bzw. 15 sind als Prismen zur Strahlablenkung ausgebildet. Optional können die Prismen justierbar aufgenommen sein, so dass etwaig notwendige Korrekturen der Strahlausrichtung an dieser Stelle durchgeführt werden können. Hinzuweisen ist darauf, dass der erste bzw. der zweite Teilstrahl 8 bzw. 9 immer noch als kollimierter Strahl vorliegt, so dass die Flächenleistungsdichte auf den optischen Elementen 11, 12, 14, 15 gering ist.

Die nun zueinander konvergierend ausgerichteten Teilstrahlen 8, 9 treten nachfolgend jeweils durch eine eigene Fokussieroptik 16 bzw. 17, die in diesem Beispiel eine Brennweite f = 280 mm aufweisen. Die Fokussieroptiken 16 bzw. 17 sind jeweils auf einer Justagehalterung 18 bzw. 19 festgelegt, die eine Verschiebung der Fokussieroptik 16 bzw. 17 in einer Ebene senkrecht zu dem jeweiligen Teilstrahl 8 bzw. 9 erlauben. Mit dieser Justagehalterung 18 bzw. 19 ist es möglich, den Fokuspunkt am Bearbeitungsort bzw. die Ausgangslaserstrahlen gezielt parallel zu verschieben. In dem vorliegenden Beispiel sind die Justagehalterungen 18 bzw. 19 jeweils als eine serielle Anordnung von gekreuzten Lineartischen ausgebildet, die über Mikrometerschrauben hochgenau und reproduzierbar verschiebbar sind. Alternativ hierzu können auch motorisch angetriebene Stellmotoren vorgesehen sein.

Die nun fokussierten Teilstrahlen 8 bzw. 9 und im weiteren als Ausgangslaserstrahlen 20 bzw. 21 bezeichneten Laserstrahlen passieren nachfolgend eine Schutzglaseinrichtung 22 bzw. 23, welche über eine Schutzglasschublade einen schnellen Wechsel des Schutzglases erlaubt. Nachfolgend werden die Ausgangslaserstrahlen 20 bzw. 21 über Düsen 24 bzw. 25 mit denen Schutz- und/oder Arbeitsgas dem Bearbeitungsort zuführbar sind, durchquert und treten dann frei aus, um sich im Bereich eines Bearbeitungsbereichs 26 zu treffen. Es ist darauf hinzuweisen, dass die Ausgangslaserstrahlen 20 bzw. 21 sich nicht unbedingt am Bearbeitungsbereichs 26 überlappen müssen, sondern es ausreichend ist, wenn diese benachbart angeordnet sind.

Zur Zuführung eines Lötdrahtes zu dem Bearbeitungsbereich 26 weist der Zweistrahlkopf 1 eine mittig oder koaxial zu den Teilstrahlen 8, 9 und/oder zu den Ausgangslaserstrahlen 20, 21 und/oder koaxial zu dem Eingangslaserstrahl 5 angeordnete Werkzeugspitze 27 auf, die als Drahtzuführung ausgebildet ist. Die Werkzeugspitze 27 definiert in seiner Längserstreckung zugleich eine Mittenachse zu dem Zweistrahlkopf 1, wobei im Bearbeitungsbereich 26 die Ausgangslaserstrahlen 20, 21 um die Werkzeugspitze 27 bzw. um einen aus der Werkzeugspitze 27 austretenden Draht 28 angeordnet sind. Insbesondere sind die Ausgangslaserstrahlen 20, 21 relativ zu der Werkzeugspitze 27 bzw. dem Draht 28 diametral zueinander angeordnet.

Ebenfalls mittig zu den Teilstrahlen 8, 9 angeordnet befindet sich im Mittelbereich des Gehäuses 6 ein unterer Abschnitt 29 und im Deckelbereich ein oberer Abschnitt 30 der Drahtzuführung.

Oberhalb der zweiten und der dritten Umlenkeinheit 11, 12 sind in einer gedachten Verlängerung der parallelen Teilstrahlen 8 bzw. 9 in rückwärtiger Strahlausbreitungsrichtung Beobachtungskameras 31 bzw. 32 angeordnet, die jeweils koaxial durch den Strahlteilerspiegel bzw. Auskoppelspiegel in der zweiten Umlenkeinheit 11 bzw. dritten Umlenkeinheit 12 den Bearbeitungsbereich 26 beobachten.

Das Gehäuse 6 des Zweistrahlkopfes 1 kann mittels dreier Deckel (nicht dargestellt) schmutzdicht verschlossen werden, wobei zusätzlich eine umlaufende Gummischnur 33 zur Dichtung vorgesehen ist.

Die Vorteile des Zweistrahlkopfes 1 sind vor allem darin zu sehen, dass im bearbeitungsbereichnahen Abschnitt des Zweistrahlkopfes 1, dieser sehr schmal mit wenigen Störkonturen ausgebildet ist. Für abgewandelte Bearbeitungsaufgaben kann als Werkzeugspitze 27 eine Pulverdüse, eine Gaszuführungsdüse (z. B. für Schneid- oder Brenngas) oder auch eine Schweißelektrode angeordnet sein. Statt den Beobachtungskameras 31, 32 können auch Pyrometer, Prozesssensoren oder dergleichen integriert sein. Das Gehäuse 6 ist mit einem rückwärtigen, nicht dargestellten, Kühlkanal gekühlt, um einen Verzug des Gehäuses und damit Ungenauigkeiten bei der Bahnführung bei der Bearbeitung vorzubeugen. Beim Einsatz des Zweistrahlkopfes 1 hat es sich als vorteilhaft erwiesen, wenn als Tool-Center-Point (TCP) die Drahtspitze 28, welche bei manchen Ausführungsformen lateral nicht justierbar ausgebildet ist, verwendet wird. Die Positionen der Ausgangslaserstrahlen 20, 21 können über die Justierhalterungen 18 bis 19 dann als Prozessparameter eingestellt werden.

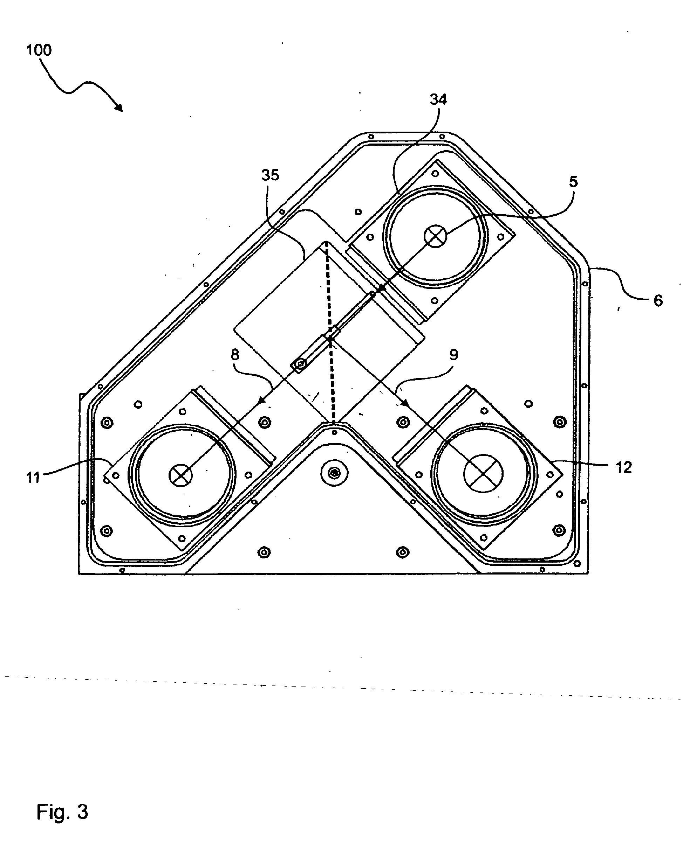

Die Figur 2 zeigt in einer schematischen Vorderansicht eine alternative Ausführung eines Zweistrahlkopfes 100, welcher in dem unteren Bereich analog zu dem Zweistrahlkopf 1 ausgebildet ist, so dass für die Beschreibung dieses Bereichs des Zweistrahlkopfes 100 auf die vorhergehende Beschreibung verwiesen wird. Im oberen Bereich ist jedoch der Strahlverlauf 2 anders ausgebildet, wie nachfolgend anhand der Figur 3 dargelegt wird.

Die Figur 3 zeigt eine Draufsicht auf den Zweistrahlkopf 100 in axialer Sicht von oben, bei abgenommenem bzw. zeichnerisch unterdrückten oberen Deckel. In Verlängerung der Kollimatoreinheit 4 (siehe Figur 2) tritt der Eingangslaserstrahl 5 ein und wird in einer zentralen Umlenkeinheit 34 rechtwinklig umgelenkt. Nachfolgend zu der zentralen Umlenkeinheit ist ein zentrales Strahlteilerelement 35 vorgesehen, welches den ersten Teilstrahl 8 (mit nur geringem Parallelversatz) transmittieren lässt und den zweiten Teilstrahl 9 um 90° ablenkt. Nach dem zentralen Strahlteilerelement 35 sind die Teilstrahlen 8 und 9 somit winklig zueinander angeordnet, wobei diese einen Winkel von 90° zueinander einnehmen. Insbesondere treten die Teilstrahlen 8 bzw. 9 aus dem zentralen Strahlteilerelement 35 mit diesem Zwischenwinkel aus. Der umgelenkte Ausgangslaserstrahl 5 sowie die zwei Teilstrahlen 8 und 9 definieren eine Verteilungsebene, welche senkrecht zu der durch die Werkzeugspitze 27 definierte Mittenachse angeordnet ist.

Nachfolgend treten die Teilstrahlen 8, 9 in Umlenkeinheiten ein, die in der Funktion der zweiten Umlenkeinheit 11 bzw. der dritten Umlenkeinheit 12 in Figur 1 entsprechen und deshalb mit den gleichen Bezugszeichen versehen sind. Nach den Umlenkeinheiten 11 bzw. 12 sind die Teilstrahlen 8, 9 parallel zueinander ausgerichtet und treten in den unteren Teil des Zweistrahlkopfes 100 ein, welcher - wie bereits erwähnt - analog zu dem unteren Bereich des Zweistrahlkopfes 1 ausgebildet ist.

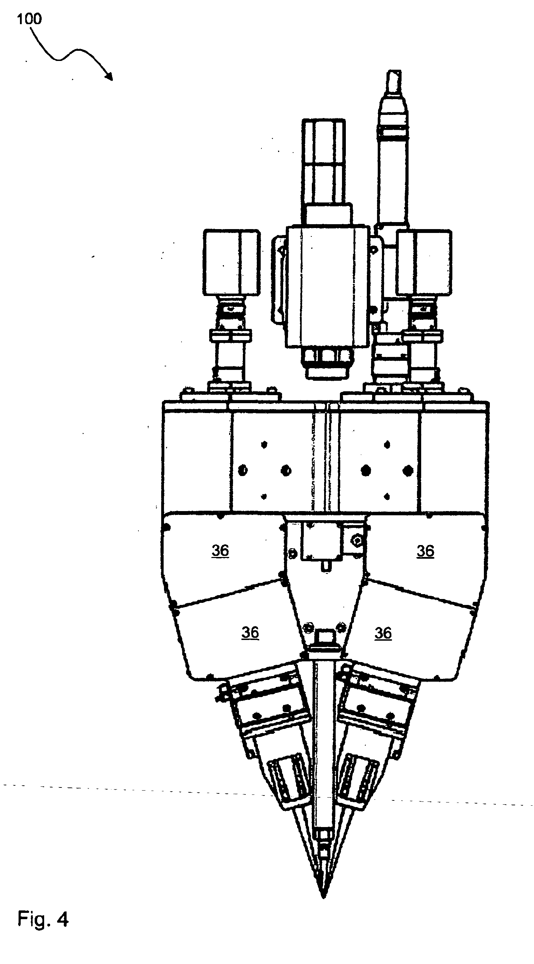

Die Figur 4 zeigt den Zweistrahlkopf 100 in gleicher Darstellung wie in der Figur 3, wobei jedoch zum Schutz der optischen Elemente Schutzdeckel 36 aufgesetzt und aufgeschraubt sind.

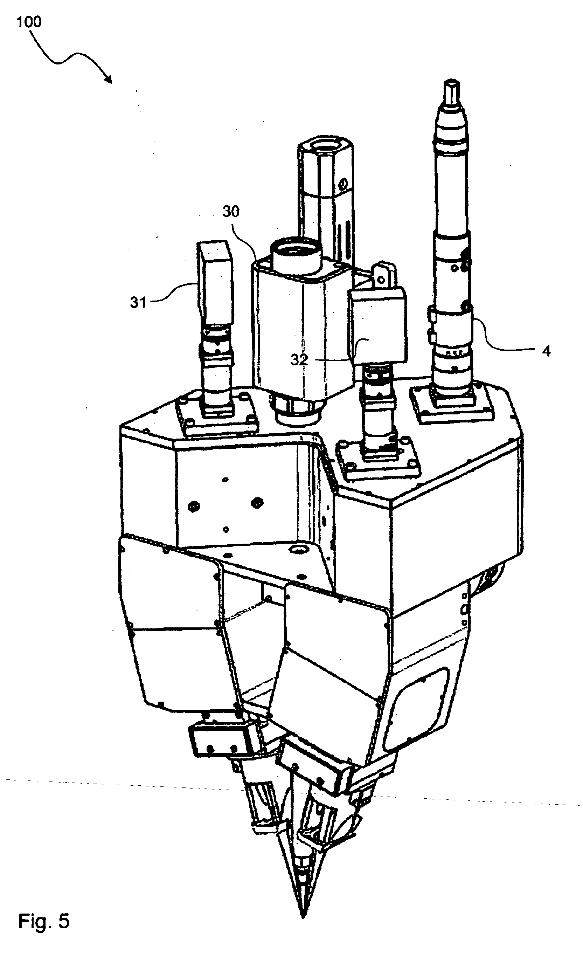

Die Figur 5 präsentiert den Zweistrahlkopf 100 in einer Darstellung schräg von oben, wobei die räumliche Verteilung von Kollimiereinheit 4 und die koaxial zu den Umlenkeinheiten 11 und 12 angeordneten Beobachtungskameras 31 und 32 nochmals zu erkennen ist.

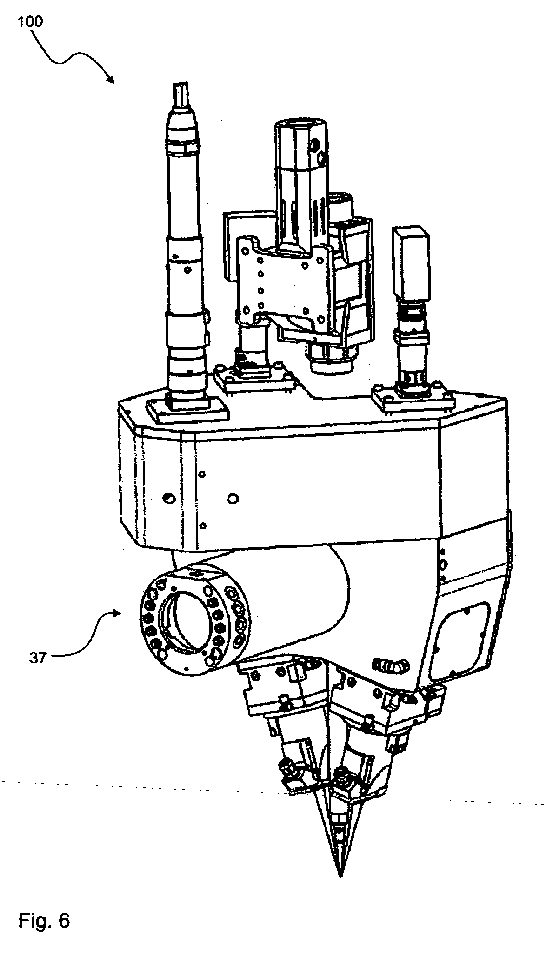

Die Figur 6 offenbart den Zweistrahlkopf 100 in einer dreidimensionalen Ansicht schräg von hinten, wobei hier ein Adapter 37 deutlich zu erkennen ist, welcher zur mechanischen Verbindung mit der Führungsmaschine ausgebildet ist, wobei der Adapter 37 eine Reihe von Verbindungsschnittstellen aufweist, die zur Verkoppelung und/oder Durchführung mit bzw. von Versorgungs-, Strom- und/oder Signalleitungen ausgebildet sind.

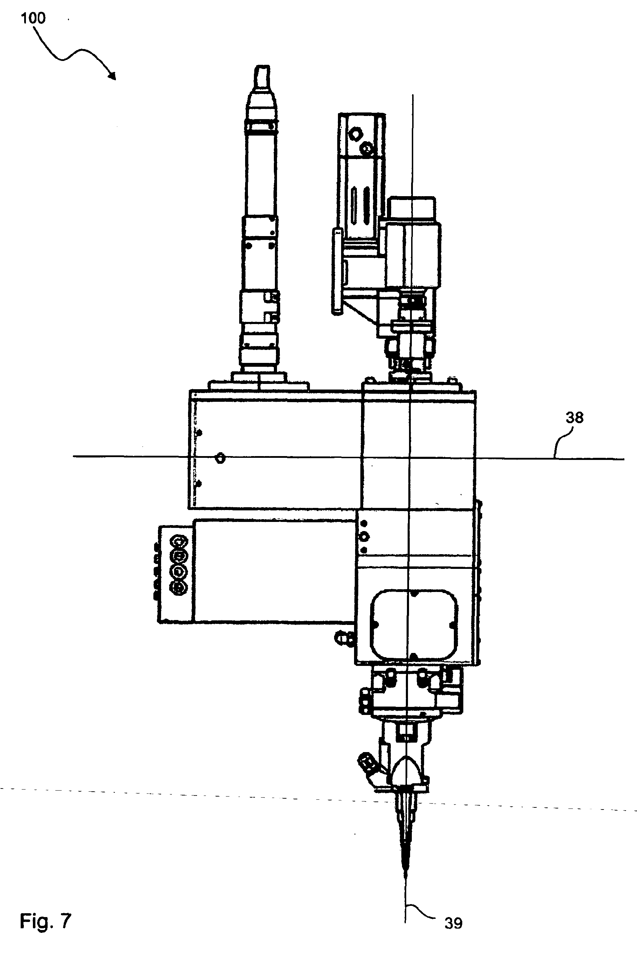

Die Figur 7 zeigt den Zweistrahlkopf 100 in einer schematischen Seitenansicht, wobei die Verteilungsebene 38 sowie die Einstrahlebene 39 eingezeichnet sind.

Selbstverständlich ist es auch möglich, den Strahlverlauf 2 in dem Zweistrahlkopf 100, ähnlich wie in dem Zweistrahlkopf 1 auszubilden, und zwar, indem das Strahlteilerelement 7 sowie die erste Umlenkeinheit 10 jeweils um 45° relativ zu dem Eingangslaserstrahl 5 verdreht wird. Hinzuweisen ist noch darauf, dass bei beiden Zweistrahlköpfen 1, 100 die Strahlwege 8 und 9 gleich lang ausgebildet sind.

### Bezugszeichenliste

- 1, 100: Zweistrahlkopf
- 2: Strahlverlauf
- 3: Faserstecker
- 4: Kollimatoreinheit
- 5: Eingangslaserstrahl
- 6: Gehäuse
- 7: Strahlteilerelement
- 8: erster Teilstrahl
- 9: zweiter Teilstrahl
- 10: erste Umlenkeinheit
- 11: zweite Umlenkeinheit
- 12: dritte Umlenkeinheit
- 13: Pfeil
- 14 bzw. 15: Ablenkeinheit
- 16 bzw. 17: Fokussieroptik
- 18 bzw. 19: Justagehalterung
- 20 bzw. 21: Ausgangslaserstrahl
- 22 bzw. 23: Schutzglaseinrichtung
- 24 bzw. 25: Düsen
- 26: Bearbeitungsbereich
- 27: Werkzeugspitze
- 28: Draht
- 29: unterer Abschnitt der Zuführungseinrichtung
- 30: obere Abschnitt der Zuführungseinrichtung
- 31 bzw. 32: Beobachtungskamera
- 33: Gummischnur
- 34: zentrale Umlenkeinheit
- 35: zentrales Strahlteilerelement
- 36: Deckel
- 37: Adapter
- 38: Verteilungsebene
- 39: Einstrahlebene

## Patentansprüche

1. Mehrstrahllaserbearbeitungskopf (1, 100), der ausgebildet ist, einen Eingangslaserstrahl (5) in mindestens zwei Ausgangslaserstrahlen (20, 21) aufzuteilen und diese in einen gemeinsamen Bearbeitungsbereich (26) zusammen zu führen,
mit einem Strahlteilermodul (11), welches ausgebildet und angeordnet ist, den Eingangslaserstrahl (5) auf einen ersten (8) und einen zweiten Strahlweg (9) in zwei Teilstrahlen aufzuteilen,
mit einem Fokussiermittel (16, 17), welches ausgebildet und angeordnet ist, die zwei Teilstrahlen zu fokussieren, um die Ausgangslaserstrahlen (20, 21) zu erzeugen, und
mit einer Zuführungseinrichtung (27, 28, 29, 30), die angeordnet und ausgebildet ist, ein Mittel in den Bearbeitungsbereich (26) zuzuführen, wobei ein Endabschnitt (27, 28) der Zuführungseinrichtung von den mindestens zwei Ausgangslaserstrahlen (20, 21) umgeben ist und wobei der Endabschnitt (27, 28) in seiner Mittelführungsrichtung eine Mittenachse für den Mehrstrahllaserbearbeitungskopf (1, 100) definiert,
**dadurch gekennzeichnet, dass**
der erste und der zweite Strahlweg (8, 9) in einer Projektion auf eine Verteilungsebene (38), die senkrecht oder im wesentlichen senkrecht zu der Mittenachse angeordnet ist, oder in der Verteilungsebene (38), zumindest abschnittsweise zueinander winklig und y-förmig verlaufend ausgebildet sind, wobei durch die y-förmige Anordnung ein Zwischenbereich zumindest zum Teil umgriffen ist, in dem Abschnitte der Zuführungseinrichtung (27, 28, 29, 30) angeordnet sind,
und/oder
der erste und/oder der zweite Strahlweg (8, 9) in einer Projektion auf eine Einstrahlebene (39), die parallel oder im wesentlichen parallel zu der Mittenachse angeordnet ist, oder in der Einstrahlebene (39) vor dem Fokussiermittel (16,17) einen stumpfwinkligen Knick aufweist bzw. aufweisen, welcher einen umschlossenen Winkel größer als 120°, vorzugsweise größer als 150°, insbesondere größer als 160° bildet, um zunächst zwischen den zwei Strahlwegen (8,9) Raum für die Integration der Zuführungseinrichtung (27, 28, 29, 30) oder Abschnitten davon zu schaffen und dann im bearbeitungsnahen Bereich die Ausgangslaserstrahlen zueinander zusammen zu führen.

2. Mehrstrahllaserbearbeitungskopf (100) nach Anspruch 1, **dadurch gekennzeichnet, dass** der erste und der zweite Strahlweg (8,9) jeweils eine Umlenkeinheit (10,11,12) aufweisen, die eine rechtwinklige oder im wesentlichen rechtwinklige Umlenkung bewirkt.

3. Mehrstrahllaserbearbeitungskopf (1, 100) nach Anspruch 2, **dadurch gekennzeichnet, dass** Beobachtungssensoren und/oder -kameras (31, 32) in gedachter Verlängerung in negativer Strahlrichtung des ersten bzw. zweiten Strahlwegs (8, 9) im Strahlverlauf nach der Umlenkung angeordnet sind.

4. Mehrstrahllaserbearbeitungskopf (1,100) nach einem der vorhergehenden Ansprüche, **dadurch gekennzeichnet, dass** das Strahlteilermodul (7) als halbdurchlässiger Spiegel ausgebildet ist.

5. Mehrstrahllaserbearbeitungskopf (1,100) nach einem der vorhergehenden Ansprüche, **dadurch gekennzeichnet, dass** die Teilstrahlen entlang des ersten und/oder des zweiten Strahlwegs (8,9) kollimiert verlaufen.

6. Mehrstrahllaserbearbeitungskopf (1,100) nach einem der vorhergehenden Ansprüche, **dadurch gekennzeichnet, dass** der Knick mittels eines ersten und/oder eines zweiten Prismas (14,15), die in dem ersten Strahlweg (8) bzw. im zweiten Strahlweg (9) angeordnet ist, erzeugt ist bzw. sind.

7. Mehrstrahllaserbearbeitungskopf (1,100) nach einem der vorhergehenden Ansprüche, **dadurch gekennzeichnet, dass** das erste und das zweite Prisma (14,15) zueinander symmetrisch angeordnet sind.

8. Mehrstrahllaserbearbeitungskopf (1,100) nach einem der vorhergehenden Ansprüche, **dadurch gekennzeichnet, dass** das Fokussiermittel als zwei getrennte Fokussieroptiken (16,17) ausgebildet ist.

9. Mehrstrahllaserbearbeitungskopf (1,100) nach Anspruch 8, **dadurch gekennzeichnet, dass** die Fokussieroptiken (16, 17) zueinander symmetrisch angeordnet sind.

10. Mehrstrahllaserbearbeitungskopf (1,100) nach Anspruch 8 oder 9, **dadurch gekennzeichnet, dass** die Fokussieroptiken (16, 17) zueinander um einen Neigungswinkel geneigt angeordnet sind.

11. Mehrstrahllaserbearbeitungskopf (1,100) nach einem der Ansprüche 8 bis 10, **dadurch gekennzeichnet, dass** der Neigungswinkel dem Knickwinkel abzüglich 180° entspricht.

12. Mehrstrahllaserbearbeitungskopf (1,100) nach einem der vorhergehenden Ansprüche, **dadurch gekennzeichnet, dass** die Fokussieroptiken (16, 17) parallel zu ihrer Flächenerstreckung und/oder senkrecht zu dem ersten bzw. zweiten Strahlweg (8,9) im Bereich der Fokussieroptiken mittels einer Verschiebemechanik (18, 19) verschiebbar angeordnet sind.

13. Mehrstrahllaserbearbeitungskopf (1,100) nach Anspruch 12, **dadurch gekennzeichnet, dass** die Verschiebungsmechanik (18, 19) zur Verschiebung der Fokussieroptiken (16, 17) als zwei gekreuzt angeordnete Verschiebetische ausgebildet ist.

14. Mehrstrahllaserbearbeitungskopf (1,100) nach Anspruch 12 oder 13, **dadurch gekennzeichnet, dass** die Verschiebung manuell oder motorisch bedienbar ausgebildet ist.

15. Mehrstrahllaserbearbeitungskopf (1,100) nach einem der vorhergehenden Ansprüche, **gekennzeichnet durch** ein Gehäuse (6), welches einen ersten optischen Raum aufweist, der im Betrieb luftdicht gegenüber der Umgebung abgeschlossen ist und der das Strahlteilermodul (7) und die Prismen (14, 15) aufnimmt.

16. Mehrstrahllaserbearbeitungskopf (1,100) nach Anspruch 15, **dadurch gekennzeichnet, dass** in dem ersten optischen Raum nur starre optische Komponenten aufgenommen sind.

17. Mehrstrahllaserbearbeitungskopf (1,100) nach Anspruch 15 oder 16, **dadurch gekennzeichnet, dass** der erste optische Raum durch einen Abschlussdeckel (36) verschlossen ist, der mit einer Dauerverschraubung befestigt ist.

18. Mehrstrahllaserbearbeitungskopf (1,100) nach einem der Ansprüche 15 bis 17, **dadurch gekennzeichnet, dass** das Gehäuse einen zweiten und/oder dritten optischen Raum aufweist, in dem die Verschiebemechaniken (18, 19) angeordnet sind und der über Wartungsluken (36) erreichbar ist.

19. Mehrstrahllaserbearbeitungskopf (1,100) nach Anspruch 18, **dadurch gekennzeichnet, dass** die Wartungsluken (36) über Schnellverschlüsse gesichert sind, die mit weniger Arbeitsaufwand zu Öffnen und zu Schließen sind wie die Dauerverschraubung.

20. Mehrstrahllaserbearbeitungskopf (1,100) nach einem der Ansprüche 15 bis 19, **dadurch gekennzeichnet, dass** das Gehäuse (6) einen einstückigen Korpus aufweist, der zugleich als optische Bank ausgebildet ist.

21. Mehrstrahllaserbearbeitungskopf (1,100) nach Anspruch 20, **dadurch gekennzeichnet, dass** das Gehäuse (6) wassergekühlt ausgebildet ist.

22. Mehrstrahllaserbearbeitungskopf (1,100) nach einem der vorhergehenden Ansprüche, **gekennzeichnet durch** eine angekoppelte Steuerung, wobei die Steuerung programmtechnisch und/oder schaltungstechnisch ausgebildet, dass der Tool-Center-Point (TCP) auf der Mittenachse des Mehrstrahllaserbearbeitungskopfes eingestellt ist.

23. Verwendung des Mehrstrahllaserbearbeitungkoptes (1,100) nach einem der vorhergehenden Ansprüche, **dadurch gekennzeichnet dass** der Mehrstrahllaserbearbeitungkopf (1, 100) als Löt-Schneid, Schweiß- und/oder Beschichtungskopf ausgebildet ist.

## Claims

1. A multi-beam laser processing head (1, 100) formed to split one incident laser beam (5) into at least two exit laser beams (20, 21), and to bring them together in one common processing area (26);
having a beam-splitting module (11) formed and arranged to split the incident laser beam (5) into two partial beams on a first (8) and a second beam path (9);
having a focusing means (16, 17) formed and arranged to focus the two partial beams to generate the exit laser beams (20, 21); and
having a feeding device (27, 28, 29, 30) arranged and formed to feed a means into the processing area (26), wherein an end section (27, 28) of the feeding device is surrounded by the at least two exit laser beams (20, 21), and wherein the end section (27, 28) defines a center line for the multi-beam laser processing head (1, 100) in its means guiding direction,
**characterized in that**
the first and the second beam paths (8, 9) are formed at least in sections at angles and γ-shaped to each other in a projection on a distribution plane (38), which is arranged perpendicular or substantially perpendicular to the center line, or in the distribution plane (38), wherein an intermediate area, in which sections of the feeding device (27, 28, 29, 30) are arranged, is at least partly encompassed by the γ-shaped arrangement.
and/or
the first and/or the second beam path (8, 9) includes or include an obtuse-angled bend in a projection on an irradiation plane (39), which is arranged parallel or substantially parallel to the center line, or in the irradiation plane (39) before the focusing means (16, 17), which obtuse-angled bend forms an enclosed angle greater than 120°, preferably greater than 150°, in particular greater than 160°, to first create space for the integration of the feeding device (27, 28, 29, 30) or sections thereof between the two beam paths (8, 9) and then to bring the exit laser beams together to each other in the area near the processing.

2. A multi-beam laser processing head (100) according to claim 1, **characterized in that** the first and the second beam paths (8, 9) each include a deviation unit (10, 11, 12) which causes a right-angled or substantially right-angled deviation.

3. A multi-beam laser processing head (1, 100) according to claim 2, **characterized in that** observation sensors and/or cameras (31, 32) are arranged in the beam trajectory after the deviation in an imaginary prolongation in the negative beam direction of the first or second beam path (8, 9).

4. A multi-beam laser processing head (1, 100) according to any one of the preceding claims, **characterized in that** the beam-splitting module (7) is formed as a semi-reflecting mirror.

5. A multi-beam laser processing head (1, 100) according to any one of the preceding claims, **characterized in that** the partial beams are collimated along the first and/or second beam path (8, 9).

6. A multi-beam laser processing head (1, 100) according to any one of the preceding claims, **characterized in that** the bend is generated by means of a first and/or second prism (14, 15) which is or are arranged in the first beam path (8) or in the second beam path (9).

7. A multi-beam laser processing head (1, 100) according to any one of the preceding claims, **characterized in that** the first and the second prism (14, 15) are arranged symmetrically to each other.

8. A multi-beam laser processing head (1, 100) according to any one of the preceding claims, **characterized in that** the focusing means is formed as two separate focusing optics (16, 17).

9. A multi-beam laser processing head (1, 100) according to claim 8, **characterized in that** the focusing optics (16, 17) are arranged symmetrically to each other.

10. A multi-beam laser processing head (1, 100) according to claim 8 or 9, **characterized in that** the focusing optics (16, 17) are arranged inclined to each other at an angle of inclination.

11. A multi-beam laser processing head (1, 100) according to any one of claims 8 through 10, **characterized in that** the angle of inclination corresponds to the bend angle less 180°.

12. A multi-beam laser processing head (1, 100) according to any one of the preceding claims, **characterized in that** the focusing optics (16, 17) are arranged shiftably parallel to their surface extension and/or perpendicular to the first or second beam path (8, 9) in the area of the focusing optics by means of a shifting mechanism (18, 19).

13. A multi-beam laser processing head (1, 100) according to claim 12, **characterized in that** the shifting mechanism (18, 19) is formed as two shifting tables arranged crossed for shifting the focusing optics (16, 17).

14. A multi-beam laser processing head (1, 100) according to claim 12 or 13, **characterized in that** the shifting is formed to be operable manually or by motor.

15. A multi-beam laser processing head (1, 100) according to any one of the preceding claims, **characterized by** a housing (6) which includes a first optical space which is sealed airtight with respect to the environment while in operation and which receives the beam-splitting module (7) and the prisms (14, 15).

16. A multi-beam laser processing head (1, 100) according to claim 15, **characterized in that** only rigid optical components are received in the first optical space.

17. A multi-beam laser processing head (1, 100) according to claim 15 or 16, **characterized in that** the first optical space is closed by a sealing lid (36) which is fastened by a permanent screw connection.

18. A multi-beam laser processing head (1, 100) according to any one of claims 15 through 17, **characterized in that** the housing includes a second and/or third optical space in which the shifting mechanisms (18, 19) are arranged and which is accessible by way of maintenance hatches (36).

19. A multi-beam laser processing head (1, 100) according to claim 18, **characterized in that** the maintenance hatches (36) are secured by way of quick-release fasteners which can be opened and closed with less effort than the permanent screw connection.

20. A multi-beam laser processing head (1, 100) according to any one of claims 15 through 19, **characterized in that** the housing (6) includes a one-piece body which is formed as an optical bench at the same time.

21. A multi-beam laser processing head (1, 100) according to claim 20, **characterized in that** the housing (6) is formed to be water-cooled.

22. A multi-beam laser processing head (1, 100) according to any one of the preceding claims, **characterized by** a coupled control, wherein the control is formed to include a program or circuitry such that the Tool Center Point (TCP) is adjusted on the center line of the multi-beam laser processing head.

23. Use of the multi-beam laser processing head (1, 100) according to any one of the preceding claims, **characterized in** the that the multi-beam laser processing head (1, 100) is formed as a soldering, cutting, welding and/or coating head.

## Revendications

1. Une tête de traitement à plusieurs faisceaux laser (1, 100) formée pour séparer un faisceau laser incident (5) en au moins deux faisceaux laser de sortie (20, 21) et pour les réunir dans une zone commune de traitement (26),
ayant un module de séparation de faisceau (11) formé et disposé pour séparer le faisceau laser incident (5) en deux faisceaux partiels sur une première (8) et une seconde voie de faisceau (9),
ayant un moyen de focalisation (16, 17) formé et disposé pour focaliser les deux faisceaux partiels pour générer les faisceaux laser de sortie (20, 21), et
ayant un dispositif d'alimentation (27, 28, 29, 30) disposé et formé pour alimenter un moyen dans la zone de traitement (26), dans lequel une section d'extrémité (27, 28) du dispositif d'alimentation est entourée par les au moins deux faisceaux laser de sortie (20, 21) et dans lequel la section d'extrémité (27, 28) définit, dans son direction de conduite du moyen, une axe centrale pour la tête de traitement à plusieurs faisceaux laser (1, 100),
**caractérisée en ce que**
la première et la seconde voies de faisceau (8, 9) sont formées, au moins en sections, à position angulaire l'une par rapport à l'autre et en forme d'Y, dans une projection sur un plan de distribution (38) qui est disposé perpendiculaire ou essentiellement perpendiculaire à l'axe centrale, ou dans le plan de distribution (38), une zone intermédiaire dans laquelle sont disposées des sections du dispositif d'alimentation (27, 28, 29, 30) étant au moins partiellement enfermée par la disposition en forme d'Y.
et/ou
la première et/ou la seconde voie de faisceau (8, 9) présente ou présentent un coude à angle obtus dans une projection sur un plan d'irradiation (39) qui est disposé parallèle ou essentiellement parallèle à l'axe centrale, ou dans le plan d'irradiation (39), avant le moyen de focalisation (16, 17), le coude à angle obtus formant un angle enfermé plus grand que 120°, en préférence plus grand que 150°, en particulier plus grand que 160°, pour d'abord créer de l'espace pour l'intégration du dispositif d'alimentation (27, 28, 29, 30) ou de sections de celui-ci entre les deux voies de faisceau (8, 9) et pour réunir ensuite les faisceaux laser de sortie l'un à l'autre dans la zone près du traitement.

2. Une tête de traitement à plusieurs faisceaux laser (100) selon la revendication 1, **caractérisée en ce que** la première et la seconde voies de faisceau (8, 9) présentent chacune une unité de déviation (10, 11, 12) qui provoque une déviation à angle droit ou essentiellement à angle droit.

3. Une tête de traitement à plusieurs faisceaux laser (1, 100) selon la revendication 2, **caractérisée en ce que** des détecteurs et/ou caméras d'observation (31, 32) sont disposés, dans le trajectoire du faisceau, après la déviation dans une prolongation imaginaire dans la direction de faisceau négative de la première ou seconde voie de faisceau (8, 9).

4. Une tête de traitement à plusieurs faisceaux laser (1, 100) selon l'une quelconque des revendications précédentes, **caractérisée en ce que** le module de séparation de faisceau (7) est formé en tant que miroir semi-réfléchissant.

5. Une tête de traitement à plusieurs faisceaux laser (1, 100) selon l'une quelconque des revendications précédentes, **caractérisée en ce que** les faisceaux partiels sont collimatés le long de la première et/ou la seconde voie de faisceau (8, 9).

6. Une tête de traitement à plusieurs faisceaux laser (1, 100) selon l'une quelconque des revendications précédentes, **caractérisée en ce que** le coude est généré au moyen de un premier et/ou un second prisme (14, 15) étant disposé(s) dans la première voie de faisceau (8) ou dans la seconde voie de faisceau (9).

7. Une tête de traitement à plusieurs faisceaux laser (1, 100) selon l'une quelconque des revendications précédentes, **caractérisée en ce que** le premier et le second prisme (14, 15) sont disposés symétriquement l'un par rapport à l'autre.

8. Une tête de traitement à plusieurs faisceaux laser (1, 100) selon l'une quelconque des revendications précédentes, **caractérisée en ce que** le moyen de focalisation est formé comme deux optiques de focalisation séparées (16, 17).

9. Une tête de traitement à plusieurs faisceaux laser (1, 100) selon la revendication 8, **caractérisée en ce que** les optiques de focalisation (16, 17) sont disposées symétriquement l'une par rapport à l'autre.

10. Une tête de traitement à plusieurs faisceaux laser (1, 100) selon la revendication 8 or 9, **caractérisée en ce que** les optiques de focalisation (16, 17) sont disposées inclinées l'une par rapport à l'autre dans un angle d'inclinaison.

11. Une tête de traitement à plusieurs faisceaux laser (1, 100) selon l'une quelconque des revendications 8 à 10, **caractérisée en ce que** l'angle d'inclinaison correspond à l'angle du coude moins 180°.

12. Une tête de traitement à plusieurs faisceaux laser (1, 100) selon l'une quelconque des revendications précédentes, **caractérisée en ce que** les optiques de focalisation (16, 17) sont disposées déplaçables et parallèles à leur extension de surface et/ou perpendiculaire à la première ou à la seconde voie de faisceau (8, 9), dans la zone des optiques de focalisation, au moyen d'un mécanisme de déplacement (18, 19).

13. Une tête de traitement à plusieurs faisceaux laser (1, 100) selon la revendication 12, **caractérisée en ce que** le mécanisme de déplacement (18, 19) est formé comme deux tables de déplacement disposés croisés pour déplacer les optiques de focalisation (16, 17).

14. Une tête de traitement à plusieurs faisceaux laser (1, 100) selon la revendication 12 ou 13, **caractérisée en ce que** le déplacement est formé opérable manuellement ou par moteur.

15. Une tête de traitement à plusieurs faisceaux laser (1, 100) selon l'une quelconque des revendications précédentes, **caractérisée par** un boîtier (6) qui présente un premier espace optique qui, en service, est hermétiquement clos par rapport à l'environnement et qui reçoit le module de séparation de faisceau (7) et les prismes (14,15).

16. Une tête de traitement à plusieurs faisceaux laser (1, 100) selon la revendication 15, **caractérisée en ce qu'**uniquement des composant optiques rigides sont reçus dans le premier espace optique.

17. Une tête de traitement à plusieurs faisceaux laser (1, 100) selon la revendication 15 or 16, **caractérisée en ce que** le premier espace optique est clos par un couvercle de fermeture (36) qui est fixé par un vissage permanent.

18. Une tête de traitement à plusieurs faisceaux laser (1, 100) selon l'une quelconque des revendications 15 à 17, **caractérisée en ce que** le boîtier présente un second et/ou un troisième espace optique dans lequel les mécanismes de déplacement (18, 19) sont disposés et qui est accessible par l'intermédiaire de lucarnes d'entretien (36).

19. Une tête de traitement à plusieurs faisceaux laser (1, 100) selon la revendication 18, **caractérisée en ce que** les lucarnes d'entretien (36) sont arrêtées par l'intermédiaire d'une fermeture rapide qui peut être ouverte et close avec moins d'effort que le vissage permanent.

20. Une tête de traitement à plusieurs faisceaux laser (1, 100) selon l'une quelconque des revendications 15 à 19, **caractérisée en ce que** le boîtier (6) présente un corps à pièce unique qui est en même temps formé en tant que banc optique.

21. Une tête de traitement à plusieurs faisceaux laser (1, 100) selon la revendication 20, **caractérisée en ce que** le boîtier (6) est formé pour être refroidi par eau.

22. Une tête de traitement à plusieurs faisceaux laser (1, 100) selon l'une quelconque des revendications précédentes, **caractérisée par** une commande accouplée, dans laquelle la commande est formée pour inclure un programme ou un circuit de telle manière que le Tool Center Point (TCP) est ajusté sur l'axe centrale de la tête de traitement à plusieurs faisceaux laser.

23. Utilisation de la tête de traitement à plusieurs faisceaux laser (1, 100) selon l'une quelconque des revendications précédentes, **caractérisée en ce que** la tête de traitement à plusieurs faisceaux laser (1, 100) est formée en tant que tête de brasage, coupage, soudage et/ou recouvrage.
